Europäisches Patentamt

European Patent Office

Office européen des brevets

(11) Numéro de publication: **0 260 174**
**B1**

# FASCICULE DE BREVET EUROPEEN

(45) Date de publication du fascicule du brevet:
25.10.89

(21) Numéro de dépôt: **87401868.2**

(22) Date de dépôt: **11.08.87**

(51) Int. Cl.⁴: **F16F 15/26**

(54) **Agencement d'un dispositif d'équilibrage dans un carter, pour moteur à pistons alternatifs.**

(30) Priorité: **09.09.86 FR 8612623**

(43) Date de publication de la demande:
**16.03.88 Bulletin 88/11**

(45) Mention de la délivrance du brevet:
**25.10.89 Bulletin 89/43**

(84) Etats contractants désignés:
**DE GB IT**

(56) Documents cités:
**DE-A- 3 142 669**
**DE-C- 1 196 012**
**US-A- 4 300 493**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Laine, Gabriel, 2 Allée de Savoie, F-78570 Andresy(FR)**
Inventeur: **Zawadzki, Henri, 1 Rue Gérard Philippe, F-94400 Vitry S/Seine(FR)**

(74) Mandataire: **Moncheny, Michel et al, c/o Cabinet Lavoix 2 Place d'Estienne d'Orves, F-75441 Paris Cedex 09(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un dispositif d'équilibrage pour moteur à combustion interne à pistons alternatifs associés à un vilebrequin.

De tels moteurs peuvent comporter des dispositifs d'équilibrage comprenant deux arbres d'équilibrage parallèles au vilebrequin entraînés en rotation par lui, l'un tournant dans le même sens et l'autre en sens inverse, voir par exemple les documents DE-B 1 196 012 ou US-A 4 300 493.

Les deux arbres d'équilibrage munis chacun d'un contrepoids excentré sont avantageusement disposés l'un près de l'autre dans un carter fixé sous le vilebrequin et situé dans le bac inférieur usuel du moteur. Ils sont chacun solidaires de l'un de deux pignons qui engrènent et qui assurent l'inversion du sens de rotation de l'un des arbres par rapport à l'autre. Le carter enveloppant les deux arbres évite que les contrepoids tournent, au moins partiellement, dans l'huile contenue dans le bac inférieur sous le vilebrequin, ce qui provoquerait une importante dépense d'énergie. Mais l'huile lubrifiant les paliers des deux arbres entre dans le carter et s'y accumule lentement jusqu'à atteindre au moins l'un des contrepoids qui, en barbotant, éjecte l'huile hors du carter par une ouverture appropriée. Ce barbotage entraîne encore une légère dépense d'énergie et surtout provoque une émulsion d'huile risquant d'être particulièrement néfaste pour la lubrification des paliers du moteur et pour le fonctionnement de poussoirs hydrauliques que comporte parfois la commande de soupapes du moteur.

En conséquence, la présente invention a pour but de réaliser un dispositif d'équilibrage muni d'arbres à contrepoids ne barbotant pas dans l'huile.

L'invention a donc pour objet l'agencement d'un dispositif d'équilibrage comprenant deux arbres à contrepoids disposés dans un carter et solidaires chacun de l'un de deux pignons en prise, caractérisé en ce que le carter est séparé par une cloison en deux parties, une partie principale et une partie auxiliaire, les contrepoids des deux arbres étant logés dans la partie principale fermée du carter qui est reliée par un passage inférieur à la partie auxiliaire contenant les deux pignons et agencée en pompe d'assèchement à engrenage, et la partie auxiliaire comporte une zone inférieure d'aspiration dans laquelle débouche le passage inférieur et une zone supérieure de refoulement reliée à une réserve d'huile.

L'invention va être décrite plus en détail ci-dessous, en se référant aux dessins annexés donnés uniquement à titre d'exemple et dans lesquels :

- la Fig.1 est une vue en coupe transversale (par un plan perpendiculaire à l'axe de son vilebrequin indiqué en I-I, Fig. 3) de la partie inférieure d'un moteur, les pignons et le couvercle de la pompe d'assèchement étant retirés ;
- la Fig.2 est une vue en coupe suivant la ligne II-II de la Fig.1 d'une partie du dispositif ;
- la Fig.3 est une vue de dessous en coupe suivant la ligne III-III de la Fig.1.

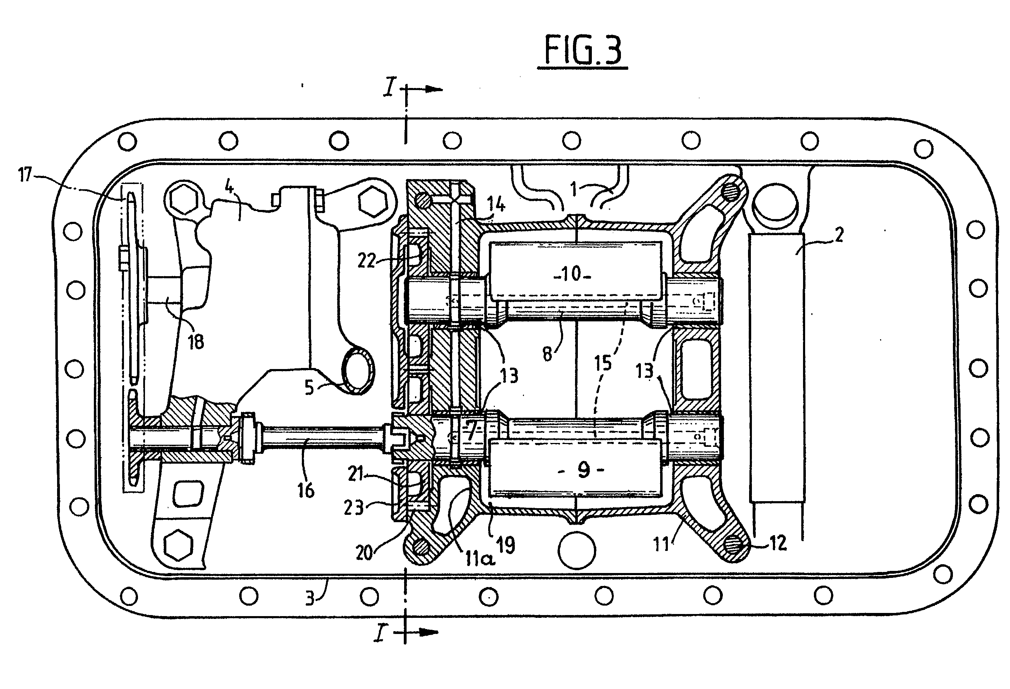

Sous un bloc-cylindres 1 contenant le vilebrequin (d'axe V) du moteur et ses paliers 2, est fixé un bac inférieur 3 contenant de l'huile (niveau moyen: N) et une pompe à huile 4 (Fig.3) dont le conduit d'aspiration 5 est relié à une crépine 6 disposée au fond du bac.

Deux arbres d'équilibrage 7, 8, parallèles à l'axe V du vilebrequin et munis chacun d'un contrepoids 9, 10, sont portés par un carter 11 situé dans le bac 3 et fixé au bloc-cylindres par des vis 12. Les arbres tournent dans des paliers 13 lubrifiés par de l'huile amenée sous pression par des conduits 14, 15 agencés dans le carter 11 et dans chaque arbre 7, 8.

L'arbre 7 est entraîné en rotation par le vilebrequin, par l'intermédiaire d'un arbre 16 accouplé à l'une de ses extrémités, au moyen d'une chaîne 17 entraînant aussi l'arbre 18 de la pompe 4.

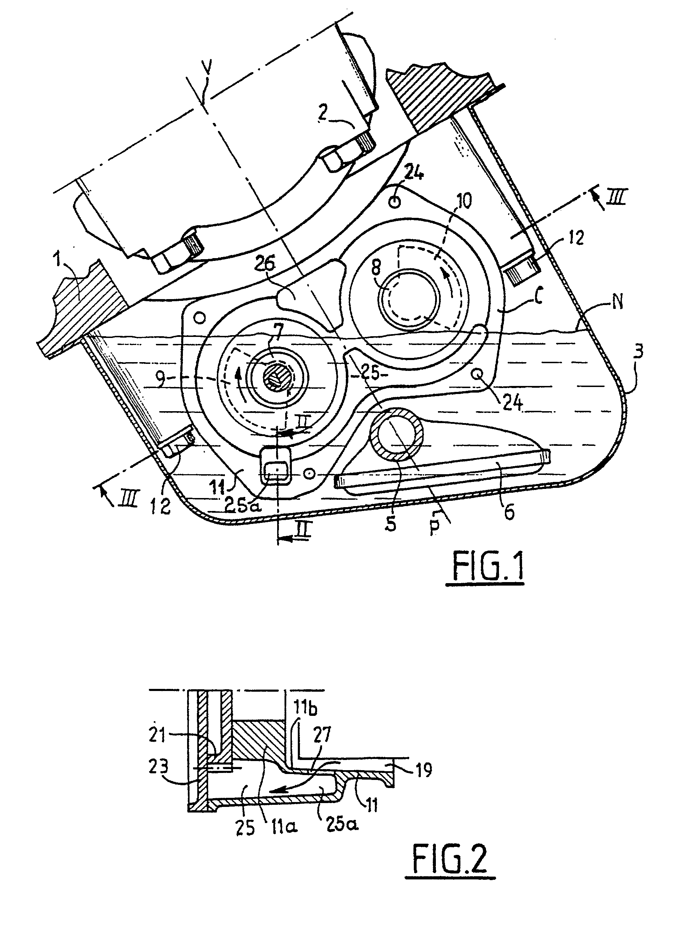

Le carter comprend une cloison 11a perpendiculaire aux axes des arbres 7, 8, qui le sépare en deux parties : une partie principale fermée 19 contenant les contrepoids 9, 10, et une partie auxiliaire 20 contenant deux pignons 21, 22 et fermée par un couvercle 23 fixé au carter par des vis non représentées, engagées dans des trous taraudés 24 du carter (Fig.3). Sur la Fig.1, le couvercle 23 et les pignons 21, 22 sont retirés.

Les pignons 21, 22 sont chacun solidaires de l'un des arbres d'équilibrage 7, 8 et ils sont en prise, provoquant l'entraînement en rotation de l'arbre 8 en sens inverse de l'arbre 7. De plus, la partie 20 du carter est aménagée en pompe d'assèchement à engrenage . Elle comporte à cet effet (Fig.1 et 2) une zone inférieure 25 d'aspiration et une zone supérieure 26 de refoulement, l'écoulement d'huile s'effectuant dans le sens approprié grâce à la rotation des pignons 21, 22, dans les sens indiqués par des flèches à la Fig.1.

La zone d'aspiration 25 s'étend également par une cavité inférieure 25a au-dessous de la partie principale 19 du carter dont elle est séparée par une extension 11b de la cloison 11a et avec laquelle elle communique par une ouverture inférieure 27 (Fig.2) ménagée dans cette cloison. L'huile parvenant dans la partie 19 par des paliers 13 passe dans la zone 25 par cette ouverture 27 et par la cavité 25a. L'assèchement de cette partie 19 est ainsi réalisé, ce qui permet une libre rotation des contrepoids 9, 10 sans risque de barbotage dans l'huile.

Le plan de symétrie P de la pompe est ici incliné et passe par l'axe V, et le passage inférieur 27 de se trouver au point le plus bas de carter afin d'en assurer l'assèchement optimal.

La zone de refoulement est reliée de façon non représentée au bac inférieur servant de réserve d'huile pour alimenter la pompe 4.

En variante, notamment dans le cas d'un moteur à bac inférieur sec et à nourrice séparée servant de réserve d'huile pour alimenter la pompe de lubrification, la zone 26 de refoulement est reliée à cette nourrice et la zone d'aspiration 25 est reliée à une partie basse du bac pour en réaliser l'assèchement, ainsi éventuellement qu'à d'autres parties du moteur dont l'assèchement est souhaitable.

## Revendications

1. Dispositif d'équilibrage pour moteur à combustion interne à pistons alternatifs comprenant deux arbres d'équilibrage (7,8) munis chacun d'un contrepoids (9,10) disposés dans un carter (1) et solidaires chacun de l'un de deux pignons (21,22) en prise, caractérisé en ce que le carter est séparé par une cloison (11a) en deux parties, une partie principale et une partie auxiliaire, les contrepoids (9,10) des arbres (7,8) sont logés dans la partie principale fermée (19) du carter (11) reliée par un passage inférieur (25a, 27) à la partie auxiliaire (20) contenant les deux pignons (21, 22) et étant agencée en pompe d'assèchement à engrenage, et la partie auxiliaire (20) comporte une zone inférieure d'aspiration (25) dans laquelle débouche le passage inférieur (25a, 27) et une zone supérieure de refoulement (26) reliée à une réserve d'huile.

2. Dispositif d'équilibrage selon la revendication 1, caractérisé en ce que le passage inférieur (25a, 27) se trouve au point le plus bas du carter (11).

3. Dispositif d'équilibrage selon la revendication 1, caractérisé en ce que la réserve d'huile est constituée par un bac inférieur (3) servant de réservoir pour une pompe de lubrification (4).

4. Dispositif d'équilibrage selon la revendication 1, caractérisé en ce que la réserve d'huile est constituée par une nourrice séparée alimentant une pompe de lubrification (4).

5. Dispositif d'équilibrage selon la revendication 4, caractérisé en ce que la zone inférieure d'aspiration (25) est reliée à une partie basse d'un bac inférieur (3) du moteur.

6. Dispositif d'équilibrage selon l'une des revendications 1 à 4, caractérisé en ce que la zone d'aspiration (25) est également reliée à au moins une autre partie du moteur.

## Patentansprüche

1. Gewichtsausgleichsvorrichtung für einen hin- und hergehende Kolben aufweisenden Verbrennungsmotor mit zwei jeweils mit einem Gegengewicht (9, 10) verbundenen Gewichtsausgleichswellen (7, 8), die in einem Gehäuse (1) angeordnet und jeweils mit einem von zwei in Eingriff stehenden Ritzeln (21, 22) fest verbunden sind, dadurch gekennzeichnet, daß das Gehäuse durch eine Trennwand (11a) in zwei Teile, nämlich einen Hauptteil und einen Hilfsteil unterteilt ist, daß die Gegengewichte (9, 10) der Wellen (7, 8) im geschlossenen Hauptteil (19) des Gehäuses (11) angeordnet sind, der über einen unteren Durchlaß (25a, 27) mit dem Hilfsteil (20) verbunden ist, der seinerseits die beiden Ritzel (21, 22) enthält und als Zahnrad-Trockenlegungspumpe ausgebildet ist und daß der Hilfsteil (20) eine untere Ansaugzone (25), in die der untere Durchlaß (25a, 27) mündet, sowie eine obere Stauzone (26), die mit einem Ölvorrat verbunden ist.

2. Gewichtsausgleichsvorrichtung nach Anspruch 1, dadurch gekennzeichnet, daß sich der untere Durchlaß (25a, 27) am tiefsten Punkt des Gehäuses (11) befindet.

3. Gewichtsausgleichsvorrichtung nach Anspruch 1, dadurch gekennzeichnet, daß der Ölvorrat von einem unteren Behälter (3) gebildet ist, der als Reservoir für eine Schmiermittelpumpe (4) dient.

4. Gewichtsausgleichsvorrichtung nach Anspruch 1, dadurch gekennzeichnet, daß der Ölvorrat von einem separaten Betriebsbehälter gebildet ist, der eine Schmiermittelpumpe (4) speist.

5. Gewichtsausgleichsvorrichtung nach Anspruch 4, dadurch gekennzeichnet, daß die untere Ansaugzone (25) mit einem unteren Teil eines unteren Behälters (3) des Motors verbunden ist.

6. Gewichtsausgleichsvorrichtung nach einem der Ansprüche 1 bis 4, dadurch gekennzeichnet, daß die Ansaugzone (25) in gleicher Weise mit wenigstens einem anderen Teil des Motors verbunden ist.

## Claims

1. A balancing device for an internal combustion engine with reciprocating pistons, comprising two balancing shafts (7, 8) which are disposed in a casing (1), each having a counterweight (9, 10) and each being attached to one of two intermeshing pinions (21, 22), characterized in that the casing is divided by a partition (11a) into two parts, namely a main part and an auxiliary part, the counterweights (9, 10) of the shafts (7, 8) being housed in the main closed part (19) of the casing (1), which is connected via a bottom passage (25a, 27) to the auxiliary part (20) containing the two pinions (21, 22) and arranged as a draining gear pump, and the auxiliary part (20) comprises a bottom suction zone (25) into which the bottom passage (25a, 27) discharges, and a top delivery zone (26) connected to an oil reserve.

2. A balancing device according to claim 1, characterized in that the bottom passage (25a, 27) is located at the lowest point of the casing (11).

3. A balancing device according to claim 1, characterized in that the oil reserve takes the form of a sump (3) acting as a reservoir for a lubricating pump (4).

4. A balancing device according to claim 1, characterized in that the oil reserve is formed by a separate auxiliary tank feeding a lubricating pump (4).

5. A balancing device according to claim 1, characterized in that the bottom suction zone (25) is connected to a bottom part of an engine sump (3).

6. A balancing device according to any of claims 1 to 4, characterized in that the suction zone (25) is also connected to at least one other component of the engine.

## FIG.1

## FIG.2

**FIG.3**